# EUROPEAN PATENT APPLICATION

(11) **EP 1 542 467 A1**
(43) Date of publication of application: **15.06.2005**
(21) Application number: 03797604.0
(22) Date of filing: 16.09.2003
(51) Int. Cl.: H04N 7/14

(54) **VIDEO INPUT DEVICE FOR CONVERSATION WITH SING LANGUAGE, VIDEO I/O DEVICE FOR CONVERSATION WITH SIGN LANGUAGE, AND SIGN LANGUAGE INTERPRETATION SYSTEM**

(30) Priority: 17.09.2002 JP 2002269852
(71) Applicant: Ginganet Corporation, Osaka-shi, Osaka 556-0017 (JP)
(72) Inventor: SAHASHI, Nozomu, Kishiwada-shi, Osaka 596-0045 (JP)
(74) Representative: Zimmermann, Tankred Klaus
(86) International application number: PCT/JP2003/011759
(87) International publication number: WO 2004/028163

(57) **Abstract**

A video input device for conversation with sign language, a video input/output device for conversation with sign language, and a sign language interpretation system using the same capable of transmitting video other than sign language while performing explanation by sign language are provided. The video input device for conversation with sign language includes a target imaging camera (16) for imaging a target other than a sign language, a sign language imaging camera (14) for imaging the sign language of a deaf-mute person, a waist fixing device (15) for fixing the sign language imaging camera (14) at the waist of the deaf-mute person, a video synthesizer (17) for synthesizing the videos of the cameras (14, 16), and a videophone connection device (18) for supplying the synthesized video to a videophone terminal (10). The input/output device for conversation with sign language further includes a display device (12) for displaying the sign language and a fixing device (13) for fixing the display device in front of the eyes of the deaf-mute person, so that the sign language video being received at the video telephone terminal (10) is supplied to the display device (12). The sign language interpretation system (100) provides a sign language interpretation service which can be used when a deaf-mute person converses with a non-deaf-mute person by using the video input/output device for conversation with sign language.

## Description

### Technical Field

The present invention relates to a video input device, a video input/output device and a sign language interpretation system using the same used by a deaf-mute person to have a conversation with sign language by way of communications means such as a videophone, and in particular to a video input device for conversation with sign language, a video input/output device for conversation with sign language and a sign language interpretation system using the same which are preferable for example in transmitting a video other than sign language while performing explanation by sign language.

### Background Art

While sign language is important means for communications to a deaf-mute person, the picture quality of prior art videophones was poor and not sufficient for a conversation with sign language between deaf-mute persons in remote locations. Nowadays, with the advancement in the communications technology, the picture quality of a videophone has been improved, thus allowing a conversation with sign language between deaf-mute persons in remote locations to be available at a practical level.

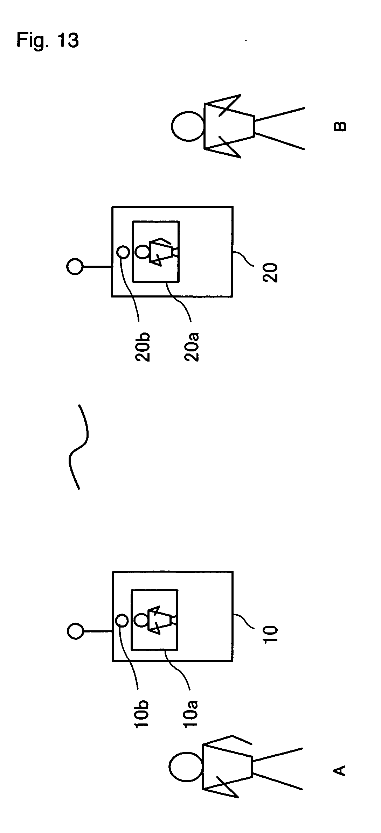

Fig. 13 shows a conceptual diagram of a conversation with sign language between deaf-mute persons by way of a prior art videophone. In Fig. 13, a numeral 10 represents a videophone terminal used by a deaf-mute person A and 20 a videophone terminal used by a deaf-mute person B. The deaf-mute person A sets the videophone terminal 10 so that his/her sign language will be picked up by an imaging section 10b and the sign language of the deaf-mute person B displayed in a video display section 10a will be viewed. Similarly, the deaf-mute person B sets the videophone terminal 20 so that his/her sign language will be picked up by an imaging section 20b and the sign language of the deaf-mute person A displayed in a video display section 20a will be viewed. By doing so, the deaf-mute person A and the deaf-mute person B have a conversation with sign language via a videophone. While a cellular phone type is used as a videophone terminal in this example, a desktop-type videophone terminal may be also used.

Next, a case will be described where a deaf-mute person converses with a non-deaf-mute person by using a videophone terminal via a sign language interpreter. Such sign language interpretation is implemented by using for example a multipoint connection unit which interconnects three or more videophone terminals to provide a teleconference service.

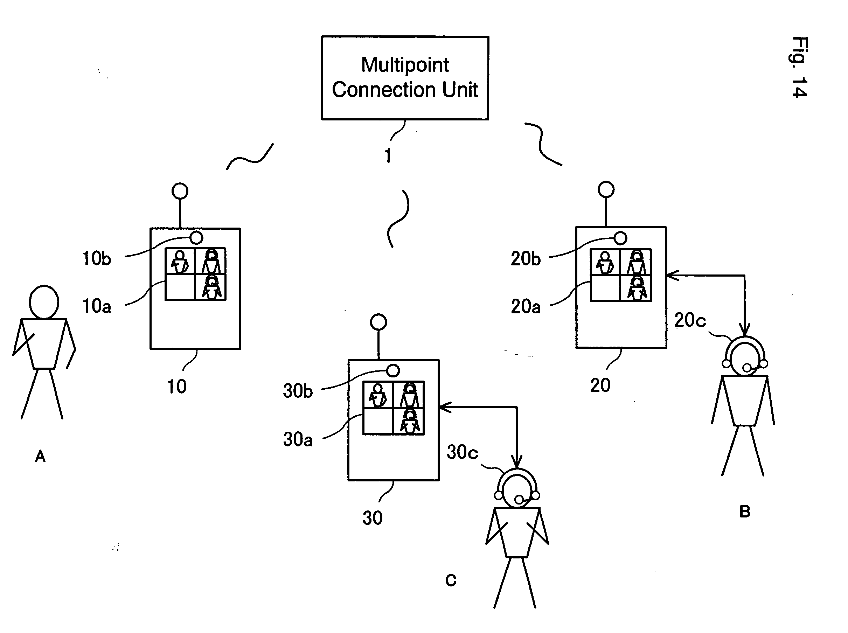

Fig. 14 is a conceptual diagram of a sign language interpretation service using a prior art multipoint connection unit. In Fig. 14, a numeral 10 represents a videophone terminal for deaf-mute persons used by a deaf-mute person A (hereinafter referred to as a deaf-mute person terminal), 20 a videophone terminal for non-deaf-mute persons used by a non-deaf-mute person B (hereinafter referred to as a non-deaf-mute person terminal), and 30 a videophone terminal for sign language interpreters used by a sign language interpreter C (hereinafter referred to as a sign language interpreter terminal). A numeral 1 represents a multipoint connection unit.

The multipoint connection unit 1 accepts connections from the terminals 10, 20, 30, receives a video and audio transmitted from the terminals, synthesizes the received video and audio, and delivers the resulting video and audio to each terminal. Thus, a video obtained by synthesizing the videos from the terminal is displayed on the display screens (10a, 20b, 30b) of the terminals. An audio obtained by synthesizing audios collected by the microphones of the headsets (20c, 30c) and the like is output to loudspeakers such as the headsets (20c, 30c) of the terminals. Synthesis of videos uses for example a four-way synthesis which equally synthesizes the videos of all parties engaged. The deaf-mute person A does not use audio input/output so that the headset of the deaf-mute person terminal 10 is omitted and voice communications are provided only between the non-deaf-mute person and the sign language interpreter. In case the environment sound is collected by the deaf-mute person terminal 10 and transmitted or in case a helper is present, a microphone or a headset may be provided.

With this configuration, when the deaf-mute person A performs sign language, the sign language interpreter C watches the sign language of the deaf-mute person A and translates it into a voice. The non-deaf-mute person B listens to the voice of the sign language interpreter C to understand the sign language of the deaf-mute person A. When the non-deaf-mute person B speaks, the sign language interpreter C listens to the voice of the non-deaf-mute person B and translates it into sign language. The deaf-mute person A watches the sign language of the sign language interpreter C to understand the speech of the non-deaf-mute person B.

However, in a conversation between deaf-mute persons using a videophone or a conversation between a deaf-mute person and a non-deaf-mute person via sign language interpretation, the videophone terminal for deaf-mute persons must pick up the sign language of the deaf-mute person and transmit the video to the distant party while the deaf-mute person is performing sign language, so that the videophone terminal for deaf-mute persons cannot transmit other videos to the distant party. Thus, the deaf-mute person cannot transmit a video other than sign language while explaining the video by sign language in a videophone conversation.

In this way, while it is possible to transmit a target video while explaining the video by way of a voice in a videophone conversation between unimpaired persons, there is no way of transmitting a target video while explaining the same video in a videophone conversation involving a deaf-mute person. As a result, explanation of the target is imprecise or a speedy conversation is difficult.

A main object of the invention is to provide a video input device for conversation with sign language, a video input/output device for conversation with sign language including the same, and a sign language interpretation system using the same enabling a deaf-mute person to transmit a target video other than sign language while performing explanation by sign language.

### Disclosure of the Invention

The invention described in claim 1 is a video input device for conversation with sign language comprising: sign language imaging means for picking up sign language; video acquisition means for acquiring a video other than sign language; video synthesis means for synthesizing a sign language video picked up by the sign language imaging means and a video other than sign language acquired by the video acquisition means; and video transmission means for transmitting the video synthesized by the video synthesis means; characterized in that a deaf-mute person can add explanation while transmitting a video other than sign language.

With this configuration, the deaf-mute person can precisely explain the target thus a conversation with sign language can be speeded up.

The invention described in claim 2 is the video input device for conversation with sign language according to claim 1, characterized in that the sign language imaging means comprises waist fixing means to be fixed at the waist of the deaf-mute person.

With this configuration, the sign language of the deaf-mute person is picked up and transmitted to the other end under certain conditions even when the deaf-mute person changes his/her position or orientation, thereby enabling stable sign language conversation.

The invention described in claim3 is the video input device for conversation with sign language according to claim 1 or 2, characterized in that the video transmission means comprises videophone connection means to be connected to a videophone terminal.

With this configuration, the deaf-mute person can use a general-purpose videophone terminal to transmit a video other than sign language with explanation by sign language added.

In particular, the videophone connection means can be connected to a videophone of the cellular phone type so that the deaf-mute person can transmit a video other than sign language with explanation by sign language added while on the road. This adds to the convenience to the deaf-mute person.

The invention described in claim 4 is the video input device for conversation with sign language according to claim 3, characterized in that the videophone connection means comprises radio communications means for performing radio communications with the videophone terminal.

With this configuration, it is no longer necessary to connect the video input device for conversation with sign language with a videophone terminal via a cable, which greatly facilitates system handling.

The invention described in claim 5 is a video input/output device for conversation with sign language comprising the video input device for conversation with sign language according to claim 3 or 4, the videophone connection means including sign language video receiving means for receiving a sign language video being received by the videophone terminal, characterized in that the video input/output device for conversation with sign language includes display means for displaying a sign language video received by the sign language video receiving means and fixing means for fixing the display means in front of the eyes of the deaf-mute person.

With this configuration, the deaf-mute person is able to add explanation by sign language while transmitting a video other than sign language, as well as get explanation by sign language while viewing the outer world by freely shifting his/her sight line. The display means fixed in front of the eyes of deaf-mute person is preferably as small as possible so as not to hamper viewing of the outer world.

The invention described in claim 6 is the video input/output device for conversation with sign language according to claim 5, characterized in that the display means comprises a convex lens which can substantially focus on a sign language video displayed on the display means when the deaf-mute person views the outer world.

With this configuration, the deaf-mute person can watch a sign language video displayed on the display means without making focus adjustment of eyeballs when he/she views the outer world. The sign language video displayed on the display means is enlarged by the convex lens so that the size of the display device is reduced.

The invention described in claim 7 is the video input/output device for conversation with sign language according to claim 5 or 6, characterized in that the fixing means has a frame structure which can be fixed to the ears and nose of a deaf-mute person.

With this configuration, the deaf-mute person can readily set the display means at the optimum position in front of his/her eyes, which adds to the convenience to the deaf-mute person.

The invention described in claim 8 is the video input/output device for conversation with sign language according to any one of claims 5 through 7, characterized in that the video acquisition means includes target imaging means for picking up a target other than sign language and the target imaging means is fixed to the fixing means and picks up the area in the viewing direction of the deaf-mute person.

With this configuration, the deaf-mute person can transmit the target video with explanation by sign language added to the opponent party while directly viewing the target for explanation. This allows the deaf-mute person to have a more speedy conversation with sign language in a more precise fashion.

The invention described in claim 9 is a sign language interpretation system interconnecting a videophone terminal for deaf-mute persons used by the deaf-mute person capable of using sign language to which is connected the video input/output device for conversation with sign language according to any one of claims 5 through 8, a videophone terminal for non-deaf-mute persons used by a non-deaf-mute person incapable of using sign language, and a videophone terminal for sign language interpreters used by a sign language interpreter in order to provide sign language interpretation in a conversation between a deaf-mute person and a non-deaf-mute person over a videophone, characterized in that the system comprises connection means equipped with a sign language interpreter registration table where the terminal number of the videophone terminal for sign language interpreters used by a sign language interpreter is registered, the connection means including a function to accept a call from the videophone terminal for deaf-mute persons or the videophone terminal for non-deaf-mute persons, a function to prompt a calling videophone terminal for which the call is accepted to enter the terminal number of the called terminal, a function to extract the terminal number of a sign language interpreter from the sign language interpreter registration table, a function to call the videophone terminal for sign language interpreters by using the extracted terminal number of the sign language interpreter, and a function to call the called videophone terminal by using the acquired called terminal number and
communications means including a function to synthesize at least a video from the videophone terminal for non-deaf-mute persons and a video from the videophone terminal for sign language interpreters and transmit the resulting video to the videophone terminal for deaf-mute persons, a function to transmit at least a video from the videophone terminal for deaf-mute persons and an audio from the videophone terminal for sign language interpreters to the videophone terminal for non-deaf-mute persons, and a function to transmit at least a video from the videophone terminal for deaf-mute persons and an audio from the videophone terminal for non-deaf-mute persons to the videophone terminal for sign language interpreters.

With this configuration, the deaf-mute person can have a videophone conversation with a non-deaf-mute person via sign language interpretation by using the video input/output device for conversation with sign language.

As a function of this invention to extract and call the terminal number of a sign language interpreter registered in a sign language interpreter registration table is included, a sign language interpreter can present a sign language interpretation anywhere he/she may be, as long as he/she can be called, thereby a flexible and efficient sign language interpretation system can be provided.

The invention described in claim 10 is the sign language interpretation system according to claim 9, characterized in that selection information for selecting a sign language interpreter is registered in the sign language interpreter registration table and that the connection means includes a function to acquire the conditions for selecting a sign language interpreter from the calling videophone terminal and a function to extract the terminal number of a sign language interpreter who satisfies the acquired selection conditions for the sign language interpreter from the sign language interpreter registration table.

With this configuration, a sign language interpreter who satisfies the object of the conversation over a videophone between a deaf-mute person and a non-deaf-mute person from among the sign language interpreters registered in the sign language interpreter registration table can be selected.

The sign language interpreter registration table includes an availability flag to register whether a registered sign language interpreter is available. The controller references an availability flag in the sign language interpreter registration table to extract the terminal number of an available sign language interpreter. It is thus possible to automatically select an available sign language interpreter, thereby eliminating useless calling and providing a more flexible and efficient sign language interpretation system.

The above object, other objects, characteristics and advantages of the invention will be apparent from the following detailed description of the embodiments of the invention made referring to drawings.

### Brief Description of the Drawings

Fig. 1 is a system block diagram of a video input/output device for conversation with sign language according to an embodiment of the invention;
Fig. 2 shows examples of a video displayed on the terminal of the opponent party of a conversation with sign language by way of the video input/output device for conversation with sign language according to the invention;
Fig. 3 is a system block diagram of a sign language interpretation system according to an embodiment of the invention;
Fig. 4 shows an example of a video displayed on each screen of a deaf-mute person terminal, non-deaf-mute person terminal, and sign language interpreter terminal in sign language interpretation using the sign language interpretation system according to the invention;
Fig. 5 is a processing flowchart of a controller in a sign language interpretation system according to an embodiment of the invention;
Fig. 6 shows an example of a sign language interpreter registration table;
Fig. 7 shows an example of a screen for prompting input of a called terminal number;
Fig. 8 shows an example of a screen for prompting input of sign language interpreter selection conditions;
Fig. 9 shows an example of a screen for displaying a list of sign language interpreter candidates;
Fig. 10 is a system block diagram of a sign language interpretation system according to another embodiment of the invention;
Fig. 11 shows an example of a connection table;
Fig. 12 is a processing flowchart of the connection processing of a sign language interpretation system according to another embodiment of the invention;
Fig. 13 is a conceptual diagram showing a conversation with sign language between deaf-mute persons by using a prior art videophone terminal; and
Fig. 14 is a conceptual diagram of a sign language interpretation service using a prior art multipoint connection unit.

### Best Mode for Carrying Out the Invention

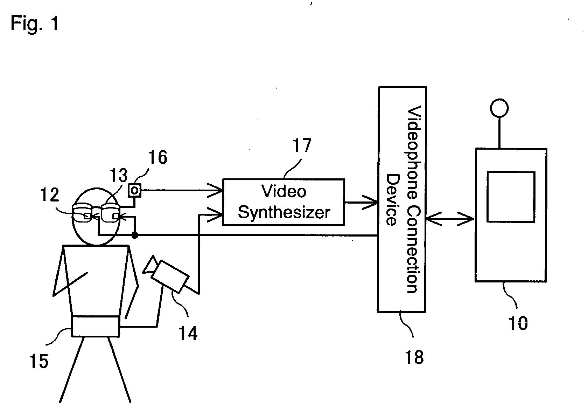

Fig. 1 is a system block diagram of a video input/output device for conversation with sign language according to an embodiment of the invention. In Fig. 1, a numeral 12 represents a display device for displaying a sign language video, 13 a fixture for fixing the display device 12 in front of the eyes of a deaf-mute person, 14 a sign language imaging camera for picking up the sign language of the deaf-mute person, 15 a waist fixture for fixing the sign language imaging camera 14 at the waist of the deaf-mute person, 16 a target imaging camera for picking up a target other than sign language, 17 a video synthesizer for synthesizing a video from the sign language imaging camera 14 and a video from the target imaging camera 16, 18 a videophone connection device for connecting the display device 12 and the video synthesizer 17 to a videophone terminal 10.

The display device 12 uses for example a small-sized liquid crystal display having a sufficient resolution to display a sign language video. The display device 12 enlarges a video so that a deaf-mute person can recognize sign language displayed with the fixture 13 attached. On the surface of the display device 12 is attached a convex lens so that sign language displayed on the display device 12 is substantially brought into focus while the deaf-mute person is viewing the outer world such as the conversation partner and the scenery. This allows the deaf-mute person to normally recognize the sign language displayed on the display device 12 while viewing the outer world.

The fixture 13 has a spectacle frame structure which can be fixed to the ears and nose of a deaf-mute person. Near the frame in front of the eyes of the deaf-mute person is attached the display device 12 for viewing of sign language without impairing the sight of the outer world. While the display device 12 is provided in lower left position in front of the eyes of the deaf-mute person in this example, it may be provided anywhere as long as it does not impair the sight of the outer world.

While the display devices 12 are provided on the same right and left positions of the fixture 13 so as to more clearly recognize the displayed sign language in this example, the display unit 12 may be provided on either side of the fixture 13 as long as the deaf-mute person can recognize the displayed sign language.

The fixture 13 is used to set the display device 12 in front of the eyes of the deaf-mute person, so that the display device 12 may be fixed to a hollow frame. Or, a transparent plate may be provided in a frame and the display unit 12 may be stuck to the transparent plate. In case the deaf-mute person has myopia, hyperopia, astigmatism, or presbyopia and thus needs a corrective lens, a corrective lens may be provided in a frame and the display device 12 may be stuck to the corrective lens.

The sign language imaging camera 14 which may be a small-sized CCD camera is fixed to the waist fixture 15. In this practice, the sign language imaging camera 14 is set to an angle of view wide enough to pick up the sign language of the deaf-mute person while it is fixed to the waist fixture 15.

The waist fixture 15 is for example a belt to fix at the waist of a deaf-mute person. Any waist fixture may be used whose buckle has an arm for fixing the sign language imaging camera 14 to allow the sign language imaging camera 14 to be set in an orientation where the sign language of the deaf-mute person can be picked up. This makes it possible to stably pick up the sign language of the deaf-mute person by using the sign language imaging camera 14 even when the deaf-mute person changes his/her position or orientation.

The target imaging camera 16 which may be similarly a small-sized CCD camera is fixed to the side of the fixture 13. When the deaf-mute person wears the fixture 13, the azimuth of imaging by the target imaging camera 16 is substantially the same as the direction of sight line of the deaf-mute person. This captures the target for conversation precisely for transmission of the video obtained.

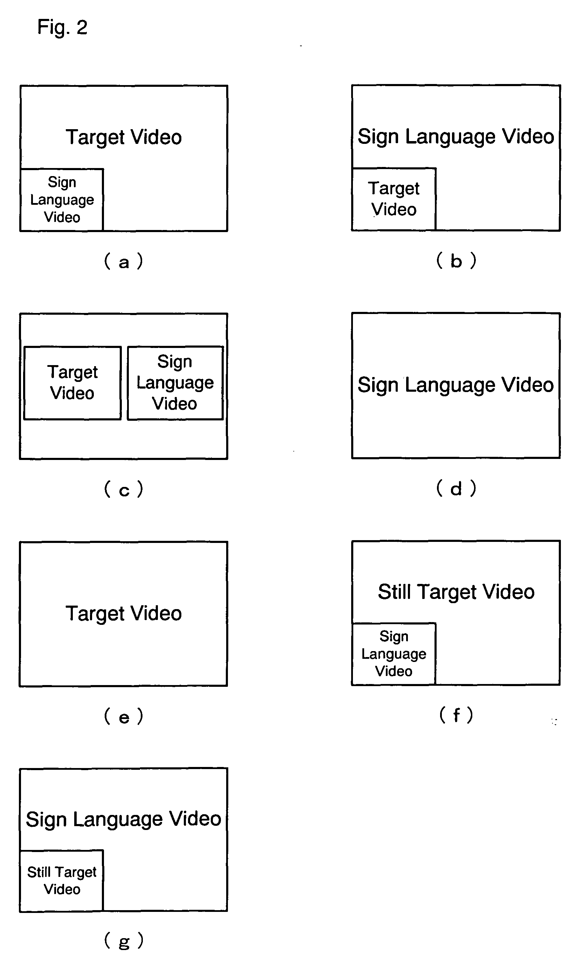

The video synthesizer 17 synthesizes a target video from the target imaging camera 16 and the sign language video from the sign language imaging camera 14 into a single synthesized video. Several methods for synthesis shown in Fig. 2 are available; a method may be selected therefrom depending on the purpose. Fig. 2(a) is a Picture-in-Picture representation where the target video is shown as a main window and the sign language video is shown as a sub window. On the other hand, Fig. 2(b) is a Picture-in-Picture representation where the sign language video is shown as a main window and the target video is shown as a sub window. Fig. 2(c) is a Picture-in-Picture representation where the target video and sign language videos are displayed in equal size. Fig. 2(d) shows the sign language video alone. Fig. 2(e) shows the target video alone. Fig. 2(f) is a Picture-in-Picture representation where a still picture with the target video frozen is shown as a main window and the sign language video is shown as a sub window. On the other hand, Fig. 2(g) is a Picture-in-Picture representation where the sign language video is shown as a main window and a still picture with the target video frozen is shown as a sub window.

Setting of the position of the sub window in a Picture-to-Picture representation is preferably subject to change as required so as not to mask important information in a main window or hide another sub window inserted in sign language interpretation described later.

The video synthesizer 17 may be accommodated in the waist fixture 15 or fixture 13 so as to supply a video signal from the target imaging camera 16 or sign language imaging camera 14 to the video synthesizer 17 accommodated in the waist fixture 15 or fixture 13 over a wired or wireless connection.

The videophone connection device 18 is a device which connects the display device 12 and the video synthesizer 17 with the external device connecting terminal of the videophone terminal 10. The videophone connection device 18 supplies a video signal being received by the videophone terminal 10 to the display device 12 as well as supplies a video signal from the video synthesizer 17 to the videophone terminal 10. Thus the display device 12 serves as an external video display device of the videophone terminal 10 and the target imaging camera 16 and the sign language imaging camera 14 serve as external video input devices of the videophone terminal 10.

When such a video input/output device for conversation with sign language is connected to a videophone terminal and a conversation with sign language is initiated, the deaf-mute person can transmit a target video with explanation by sign language added to the conversation partner. This provides the same advantage as that obtained by an unimpaired person's aural explanation added to the target video. As a result, a speedy conversation is made possible. Further, it is possible to transmit information on the target to the opponent party in more precise fashion.

While the fixture 13 for fixing the display device 12 in front of the eyes of a deaf-mute person uses a spectacle frame structure in the above embodiment, the fixture 13 may comprise a hair band fixed to the head equipped with an arm for supporting the display device 12, or may have any structure as long as it can fix the display device 12 in front of the eyes of the deaf-mute person.

While the target imaging camera 16 is fixed to the side of the fixture 13 in the above example, the invention is not limited thereto but the target imaging camera 16 may be fixed to the head of the deaf-mute person separately from the fixture 13.

While the sign language imaging camera 14 comprises the waist fixture 15 fixed at the waist of the deaf-mute person in the above embodiment, the sign language imaging camera 14 may use any type of fixing means as long as it can pick up the sign language of the deaf-mute person and provides the same effect of the invention.

While the target imaging camera 16 for picking up a target for a conversation other than sign language is provided in the above embodiment, an external video signal input terminal for inputting external video signal may be provided and a video signal input from the external video signal input terminal and a video signal from the sign language imaging camera 14 may be synthesized by the video synthesizer 17 for transmission to the conversation partner. With this configuration, it is possible to display a video from an external camera or a video from a VTR as a target for the conversation and discussion with the partner on the contents of the video with sign language is allowed.

While the videophone connection device 18 connects the display device 12 and the video synthesizer 17 with the external device connecting terminal of the videophone terminal 10, via wires in the above embodiment, a radio communications device for wirelessly transmitting/receiving a video signal may be provided on each of the external device connecting terminal of the videophone terminal 10, the fixture 13 and the video synthesizer 17. This eliminates the need for cabling the videophone terminal 10, the fixture 13, and the video synthesizer 17, which provides extreme ease of handling.

In case the videophone terminal 10 comprises a wireless interface conforming to a Standard such as Bluetooth® for communicating with an external device, a communications device conforming to the same Standard should be provided on each of the fixture 13 and the video synthesizer 17. By doing so, it is possible to communicate a video signal without physically connecting anything to the videophone terminal 10 as long as the communications devices provided on the fixture 13 and the video synthesizer 17 are within the service area of the wireless interface of the videophone terminal 10, which adds to the ease of handling.

While a videophone terminal of a telephone type, especially a videophone terminal of a cellular phone type is used in the above embodiment, the invention is not limited thereto but a videophone terminal of the IP type to connect to the Internet may be equally used.

While the above embodiment describes a video input/output device for conversation with sign language comprising a sign language imaging camera 14, a target imaging camera 16, a video synthesizer 17, a display device 12, a fixture 13, and a videophone connection device 18, characterized in that the video input/output device for conversation with sign language includes both a function to synthesize a sign language video and a target video and supplying the resulting video to the videophone terminal 10 and a function to acquire a sign language video being received by a videophone terminal 10 and display the sign language video on the display device 12, a video input device for conversation with sign language comprising a sign language imaging camera 14 for picking up sign language, a target imaging camera 16 for picking up a target other than sign language, a video synthesizer 17 for synthesizing a video from the sign language imaging camera 14 and a video from the target imaging camera 16, and a videophone connection device 18 for supplying the synthesized video signal to the videophone terminal 10 allows the deaf-mute person to perform explanation by sign language while transmitting the video of a target other than sign language to the opponent party, which provides the effect of the invention.

Next, a sign language interpretation system will be described which allows selection of a sign language interpreter satisfying the object of a conversation in case a deaf-mute person converses with a non-deaf-mute person via a sign language interpreter by using a video input/output device for conversation with sign language according to the invention.

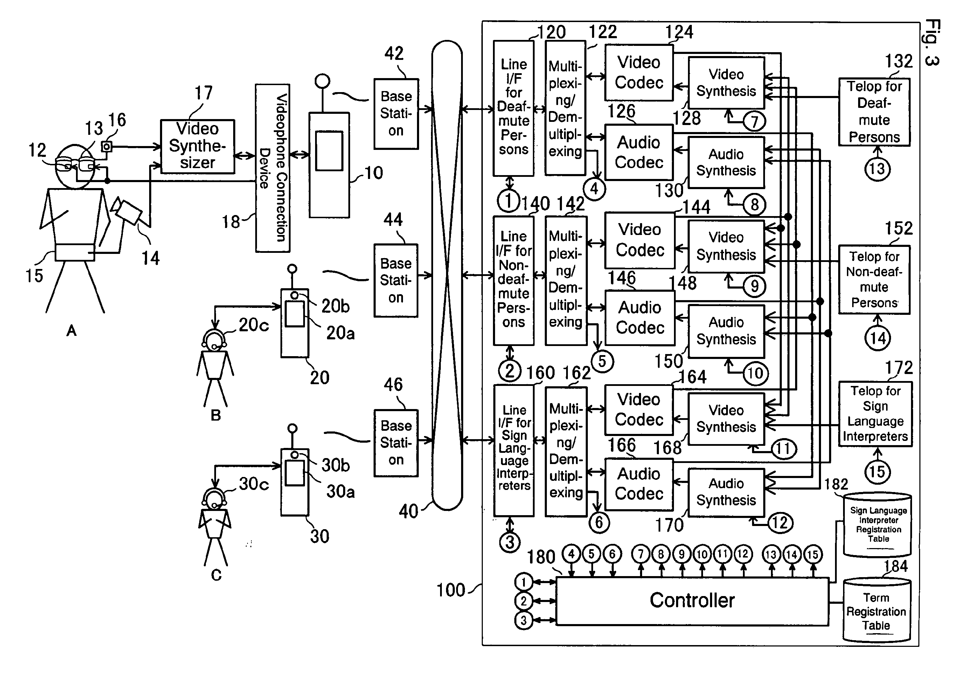

Fig. 3 is a system block diagram of a sign language interpretation system according to an embodiment of the invention. In Fig. 3, a numeral 100 represents a sign language interpretation system installed in a sign language interpretation center which provides a sign language interpretation service. The sign language interpretation system 100 interconnects, via a public telephone line 40, a videophone terminal for deaf-mute persons used by a deaf-mute person A (hereinafter referred to as a deaf-mute person terminal) 10, a videophone terminal for non-deaf-mute persons used by a non-deaf-mute person B (hereinafter referred to as a non-deaf-mute person terminal) 20, and a videophone terminal for sign language interpreters used by a sign language interpreter C (hereinafter referred to as a sign language interpreter terminal) 30 in order to provide a sign language interpretation service in a videophone conversation between a deaf-mute person and a non-deaf-mute person. In this embodiment, each of the deaf-mute person terminal 10, non-deaf-mute person terminal 20 and sign language interpreter terminal 30 is a telephone-type videophone terminal to be connected to a public telephone line, and in particular a wireless videophone terminal of the cellular phone type which can be carried for use on the road.

Such a videophone terminal connected to a public line may be an ISDN videophone terminal based on ITU-T recommendation H.320, the invention is not limited thereto and may use a videophone terminal which employs a unique protocol.

When the video input/output device for conversation with sign language is connected to the deaf-mute person terminal 10 and the deaf-mute person A wears the fixture 13 and the waist fixture 15, a sign language video received by the deaf-mute person terminal 10 is displayed on the display device 12 fixed in front of the eyes of the deaf-mute person A. The target imaging camera 16 for picking up the area in the direction of sight line of the deaf-mute person A and the sign language imaging camera 14 for picking up the sign language of the deaf-mute person are set and a synthesized video including a video of the target and explanation by sign language is transmitted to the opponent party.

The non-deaf-mute person terminal 20 is a general videophone terminal comprising a video display section 20a for displaying a video received from the opponent party, an imaging section 20b for picking up the user or target, and a headset 20c for audio input/output.

The sign language interpreter terminal 30 is also a general videophone terminal of a similar configuration to the non-deaf-mute person terminal 20, except that the video display section 30a is mainly used to view the sign language of the deaf-mute person A and the video imaging section 30b is mainly used to pick up the sign language translated into by the sign language interpreter. The headset 30c is mainly used to listen to the voice of the non-deaf-mute person B and input the voice translated into from the sign language of the deaf-mute person A.

While input/output of voice is made using a handset on a typical telephone-type terminal, a headset is used instead in order to keep free both hands of the user whose major concern is sign language. In the following description, a terminal uses a headset fixed on the head of the user including a non-deaf-mute person B. While a headset is not shown on the deaf-mute person terminal 10, a headset may be used and voice communications may be used as well, in case a helper is there.

The sign language interpretation system 100 comprises a line interface for the deaf-mute person terminal to connect to a deaf-mute person terminal (hereinafter referred to as an I/F) 120, a line I/F for the non-deaf-mute person terminal 140 to connect to a non-deaf-mute person terminal, and a line I/F for the sign language interpreter terminal 160 to connect to a sign language interpreter terminal. To each I/F are connected a multiplexer/demultiplexer 122, 142, 162 for multiplexing/demultiplexing a video signal, an audio signal or a data signal, a video CODEC (coder/decoder) 124, 144, 164 for compressing/expanding a video signal, and an audio CODEC 126, 146, 166 for compressing/expanding an audio signal. Each line I/F, each multiplexer/demultiplexer, and each video CODEC or each audio CODEC perform call control, streaming control compression/expansion of a video/audio signal in accordance with a protocol used by each terminal.

To the video input of the video CODEC 124 for the deaf-mute person terminal 124 is connected a video synthesizer 128 for synthesizing the video output of the video CODEC for the non-deaf-mute person terminal 144, the video output of the video CODEC for the sign language interpreter terminal 164 and the output of the telop memory for the deaf-mute person terminal 132.

To the audio input of the audio CODEC for the deaf-mute person terminal 126 is connected an audio synthesizer 130 for synthesizing the audio output of the audio CODEC for the non-deaf-mute person terminal 146 and the audio output of the audio CODEC for the sign language interpreter terminal 166.

While audio input/output is not made on a deaf-mute person terminal in general, so that the audio CODEC 126 or the audio synthesizer 130 for the deaf-mute person terminal may be omitted, a voice communications function is preferably provided for a case where the environment sound of a deaf-mute person terminal is to be transmitted to a non-deaf-mute person terminal or a case where a helper assists the deaf-mute person.

To the video input of the video CODEC for the non-deaf-mute person terminal 144 is connected a video synthesizer 148 for synthesizing the video output of the video CODEC for the deaf-mute person terminal 124, the video output of the video CODEC for the sign language interpreter terminal 164 and the output of the telop memory for the non-deaf-mute person terminal 152.

To the audio input of the audio CODEC for the non-deaf-mute person terminal 146 is connected an audio synthesizer 150 for synthesizing the audio output of the audio CODEC for the deaf-mute person terminal 126 and the audio output of the audio CODEC for the sign language interpreter terminal 166.

While video display of a sign language interpreter may be omitted on a non-deaf-mute person terminal, understanding of the voice interpreted by the sign language interpreter is made easy by displaying the video of the sign language interpreter, so that a function is preferably provided to synthesize the video of a sign language interpreter.

To the video input of the video CODEC for the sign language interpreter terminal 164 is connected a video synthesizer 168 for synthesizing the video output of the video CODEC for the deaf-mute person terminal 124, the video output of the video CODEC for the non-deaf-mute person terminal 144 and the output of the telop memory for the sign language interpreter terminal 172.

To the audio input of the audio CODEC for the sign language interpreter terminal 166 is connected an audio synthesizer 170 for synthesizing the audio output of the audio CODEC for the deaf-mute person terminal 126 and the audio output of the audio CODEC for the non-deaf-mute person terminal 146.

While video display of a non-deaf-mute person may be omitted on a sign language interpreter terminal, understanding of the voice in interpreting the voice of a non-deaf-mute person is made easy by displaying the video of the non-deaf-mute person, so that a function is preferably provided to synthesize the video of a non-deaf-mute person.

The sign language interpretation system 100 is equipped with a sign language interpreter registration table 182 where the terminal number of a terminal for sign language interpreters used by a sign language interpreter is registered and includes a controller 180 connected to each of the line I/Fs 120, 140, 160, multiplexers/demultiplexers 122, 144, 162, video synthesizers 128, 148, 168, audio synthesizers 130, 150, 170, and telop memories 132, 152, 172. The controller 180 provides a function to connect a calling terminal, a sign language interpreter terminal and a called terminal by way of a function to accept a call from a terminal used by a deaf-mute person or a terminal used by a non-deaf-mute person, a function to prompt a calling terminal to enter the called terminal number, a function to extract the terminal number of a sign language interpreter from the sign language interpreter registration table 182, a function to call the extracted terminal number, and a function to call the terminal number of the called terminal, and also provides a function to switch between video/audio synthesis methods used by video/audio synthesizers and a function to generate a telop and transmit the telop to a telop memory.

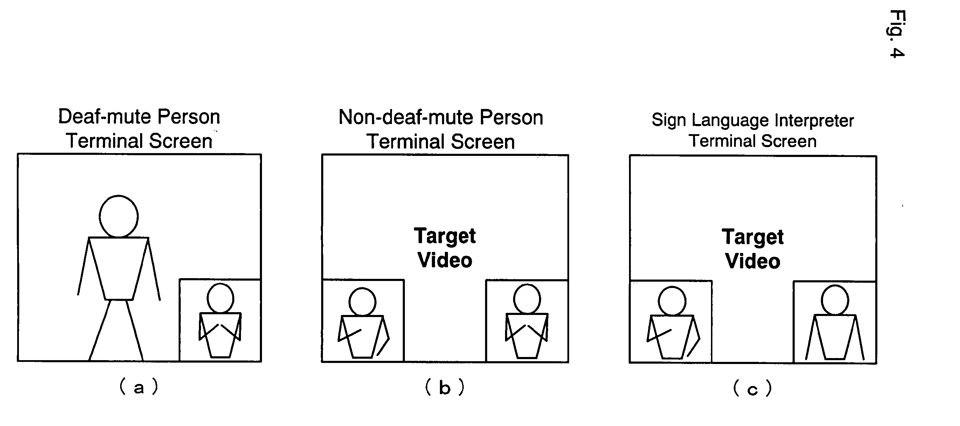

Fig. 4 shows an example of a video displayed on the screen of each terminal during a videophone conversation by way of the sign language interpretation system according to the invention. Fig. 4(a) shows the screen of a deaf-mute person terminal. A video synthesizer 128 displays on the screen a video obtained by synthesizing a video of a non-deaf-mute person terminal and a video of a sign language interpreter terminal. While the video of the non-deaf-mute person is displayed as a main window and the video of the sign language interpreter is displayed as a sub window in a Picture-in-Picture fashion, a Picture-in-Picture display is also possible assuming the video of the sign language interpreter as a main window and the video of the non-deaf-mute person as a sub window. Or, these videos may be displayed in equal size. When the video of a sign language interpreter is displayed in a larger size, the sign language interpreted by the sign language interpreter is easier to understand. A command from a terminal is preferably used to change the position of a sub window in the Picture-in-Picture display so that the sub window will not mask important information in the main window.

Fig. 4(b) shows the screen of a non-deaf-mute person terminal. The video synthesizer 148 displays on the screen a video obtained by synthesizing a video of a deaf-mute person terminal and a video of a sign language interpreter terminal. While the video of the deaf-mute person terminal is a Picture-in-Picture representation including the target video picked up by the target imaging camera 16, the sign language video picked up by the sign language imaging camera 14 arranged on the lower left of the target video, and the video of the sign language interpreter arranged on the lower right of the target video. The video of the sign language interpreter may be omitted. By displaying the video of the sign language interpreter in a Picture-in-Picture fashion, the non-deaf-mute person can check the expression of the sign language interpreter on the screen, which makes it easier to understand the voice translated into by the sign language interpreter.

Fig. 4(c) shows the screen of a sign language interpreter terminal. The video synthesizer 168 displays on the screen a video obtained by synthesizing a video of a deaf-mute person terminal and a video of a non-deaf-mute person terminal. In this case also, the video of the deaf-mute person terminal is a Picture-in-Picture representation including the target video picked up by the target imaging camera 16, the sign language video picked up by the sign language imaging camera 14 arranged on the lower left of the target video, and the video of the non-deaf-mute person arranged on the lower right of the target video. The video of the non-deaf-mute person may be omitted. By displaying the video of the non-deaf-mute person in a Picture-in-Picture fashion, the sign language interpreter can check the expression of the non-deaf-mute person on the screen, which makes it easier to understand the voice of the non-deaf-mute person as a target for sign language interpretation.

In order to support a case where the environment sound of a deaf-mute person terminal is to be transmitted or a case where a helper assists the deaf-mute person, a voice obtained by synthesizing the voice from the non-deaf-mute person terminal and the voice from the sign language interpreter terminal by using the audio synthesizer 130 is output to the deaf-mute person terminal, a voice obtained by synthesizing the voice from the deaf-mute person terminal and the voice from the sign language interpreter terminal by using the audio synthesizer 150 is output to the non-deaf-mute person terminal, and a voice obtained by synthesizing the voice from the non-deaf-mute person terminal and the voice from the deaf-mute person terminal by using the audio synthesizer 170 is output to the sign language interpreter terminal.

In case it is not necessary to transmit the environment sound of the deaf-mute person terminal or a helper is not present, the audio synthesizers 130, 150 and 170 may be omitted and the output of the audio CODEC for the non-deaf-mute person terminal 146 may be connected to the input of the audio CODEC for the sign language interpreter terminal 166 and the output of the audio CODEC for the sign language interpreter terminal 166 may be connected to the input of the audio CODEC for the non-deaf-mute person terminal 146.

Operation of the video synthesizers 128, 148, 168 and audio synthesizers 130, 150, 170 is controlled by the controller 180. The user may change the video output method or audio output method by pressing a predetermined number button of a dial pad of each terminal. This is implemented when a push on the number button on the dial pad of each terminal is detected as a data signal or a tone signal by the multiplexer/demultiplexer 122, 144, 162 and detection of the push on the button is signaled to the controller.

With this configuration, flexibility in the usage of the system on each terminal is ensured. For example, only necessary videos or audios are selected and displayed/output in accordance with the object or it is possible to replace a main window with a sub window, or change the position of the sub window.

To the input of the audio synthesizers 128, 148, 168 are respectively connected a telop memory for the deaf-mute person 132, a telop memory for the non-deaf-mute person 152, and a telop memory for the sign language interpreter 172. Contents of each telop memory 132, 152, 172 can be set from the controller 180.

With this configuration, by setting a message to be displayed on each terminal to the telop memories 132, 152, 172 and issuing an instruction to select a signal of the telop memories 132, 152, 172 to the audio synthesizers 128, 148, 168 in the setup of a videophone conversation via sign language interpretation, it is possible to transmit necessary messages to respective terminals to establish a three-way call.

In case there is a term which is hard to explain using sign language or a word which is hard to pronounce in a videophone conversation, it is possible to register in advance the term in the term registration table 184 of the controller 180 in association with the number of the dial pad on each terminal. By doing so, it is possible to detect a push on the dial pad on each terminal during a videophone conversation, extract the term corresponding to the number of the dial pad pressed from the term registration table, generate a text telop, and set the text telop to each telop memory, thereby displaying the term on each terminal.

With this configuration, a term which is hard to explain using sign language or a word which is hard to pronounce is transmitted by way of a text telop to the opponent party, thus providing a quicker and more to-the-point videophone conversation.

Next, a processing flow of the controller 180 for setting a videophone conversation via sign language interpretation is explained.

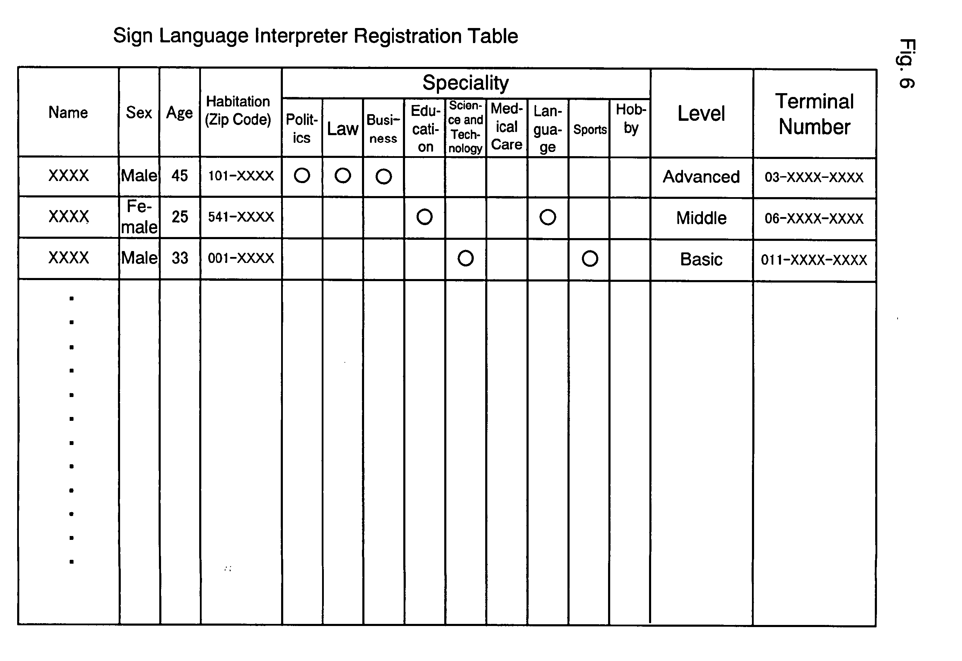

Prior to processing, information to select a sign language interpreter and the terminal number of a terminal used by each sign language interpreter are registered in the sign language interpreter registration table 182 of the controller 180 from an appropriate terminal (not shown). Fig. 6 shows an example of registration item to be registered in the sign language interpreter registration table 182. The information to select a sign language interpreter refers to information used by the user to select a desired sign language interpreter, which includes a sex, an age, a habitation, a specialty, and the level of sign language interpretation. The habitation assumes a case where the user desires a person who has geographic knowledge on a specific area and, in this example, a ZIP code is used to specify an area. The specialty assumes a case where, in case the conversation pertains to a specific field, the user desires a person who has expert knowledge on the field or is familiar with the topics in the field. In this example, the fields a sign language interpreter is familiar with are classified into several categories to be registered, such as politics, law, business, education, science and technology, medical care, language, sports, and hobby. The specialties are diverse, so that they may be registered hierarchically and searched through at a level desired by the user when selected.

In addition, qualifications of each sign language interpreter may be registered in advance for the user to select a qualified person as a sign language interpreter.

The terminal number to be registered is the telephone number of the terminal, because in this example a videophone terminal to connect to a public telephone line is assumed.

In the sign language interpreter registration table 182 is provided an availability flag to indicate whether sign language interpretation can be accepted. A registered sign language interpreter can call the sign language interpretation center from his/her terminal and enter a command by using a dial pad to set/reset the availability flag. Thus, a sign language interpreter registered in the sign language interpreter registration table can set the availability flag only when he/she is available for sign language interpretation, thereby eliminating useless calling and allowing the user to select an available sign language interpreter without delay.

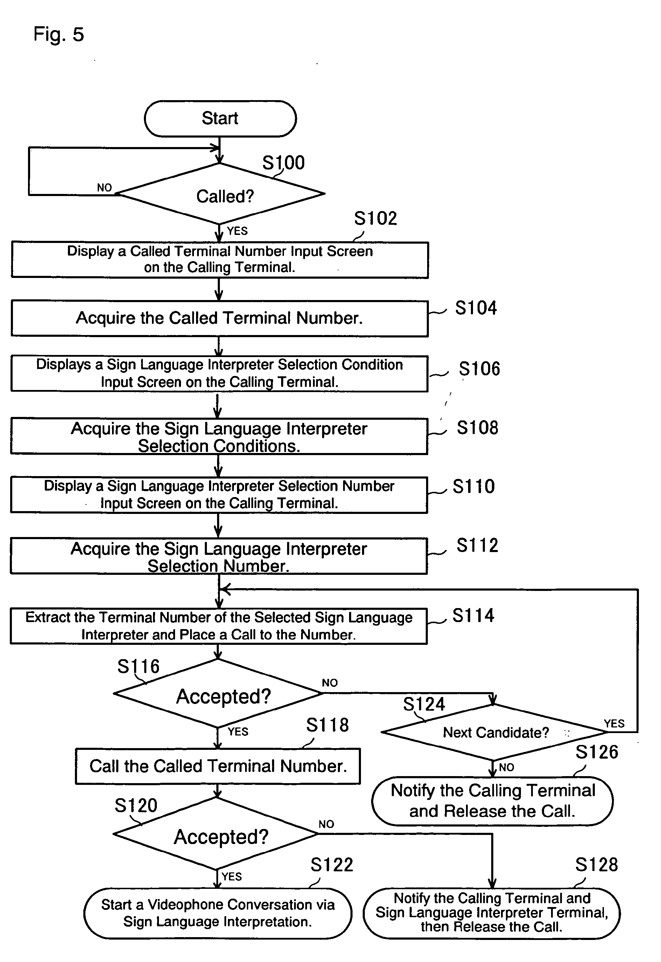

Fig. 5 shows a processing flowchart of the controller 180. The sign language interpretation system 100 allows a deaf-mute person terminal or non-deaf-mute person terminal to propose a sign language interpretation service. From the deaf-mute person terminal, the user places a call to a telephone number on the line I/F for the deaf-mute person terminal. From the non-deaf-mute person terminal, the user places a call to a telephone number on the line I/F for the non-deaf-mute person terminal. This calls the sign language interpreter terminal and the opponent terminal and establishes a videophone connection via sign language interpretation.

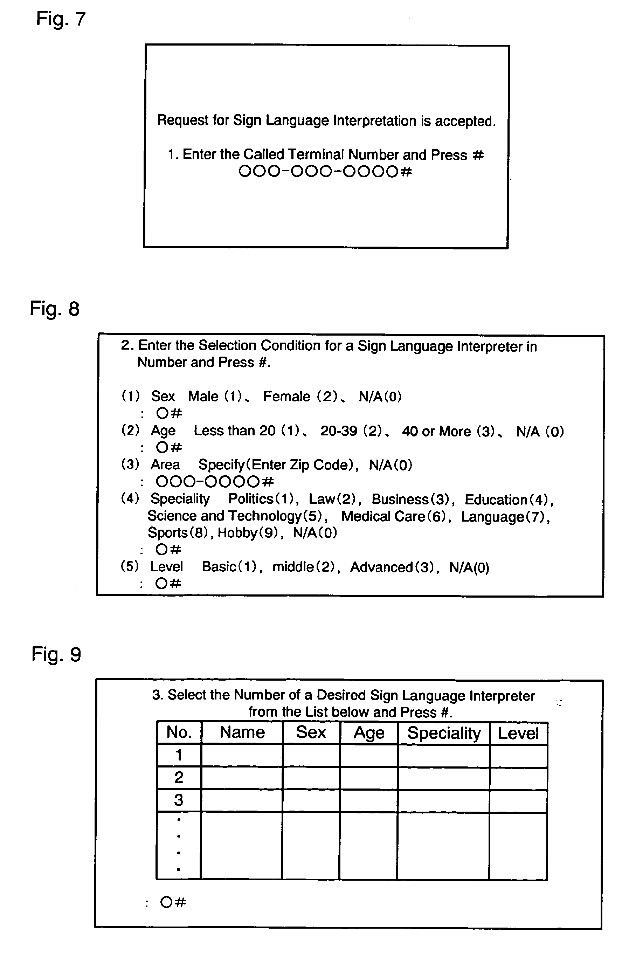

As shown in Fig. 5, it is first detected that the line I/F for the deaf-mute person terminal 120 or line I/F for the non-deaf-mute person terminal 140 is called (S100). Next, the calling terminal displays a screen to prompt input of the terminal number of the called party shown in Fig. 7 (S102). The terminal number of the called party input by the caller is acquired (S104). The calling terminal displays a screen to prompt input of the selection conditions for a sign language interpreter shown in Fig. 8 (S106). The sign language interpreter selection conditions input by the caller are acquired (S108). The sign language interpreter selection conditions input by the caller are sex, age bracket, area, specialty and sign language level. A corresponding sign language interpreter is selected based on the sex, age, habitation, specialty, and sign language level registered in the sign language interpreter registration table 182. The area is specified by using a ZIP code and a sign language interpreter is selected starting with the habitation closest to the specified area. For any selections, in case it is not necessary to specify a condition, N/A may be selected.

Next, a sign language interpreter with availability flag set is selected from among the sign language interpreters satisfying the selection conditions acquired referring to the sign language interpreter registration table 182. The calling terminal displays a list of sign language interpreter candidates shown in Fig. 9 to prompt input of the selection number of a desired sign language interpreter (S110). The selection number of the sign language interpreter input by the caller is acquired (S112) and the terminal number of the selected sign language interpreter is extracted from the sign language interpreter registration table 182 and the terminal is called (S114). When the sign language interpreter terminal has accepted the call (S116), the called terminal number is extracted and called (S118). When the called terminal has accepted the call (S120), a videophone conversation via sign language interpretation starts (S122).

In case the sign language interpreter terminal selected in S166 does not accept the call, whether a next candidate is available is determined (S124). In case a next candidate is available, execution returns to S114 and the procedure is repeated. Otherwise the calling terminal is notified as such and the call is released (S126).

In case the called terminal does not accept the call in S120, the calling terminal and the selected sign language interpreter terminal are notified as such and the call is released (S128).

While in case the selected sign language interpreter terminal does not accept the call, the caller is notified as such and the call is released in the above embodiment, a sign language interpretation reservation table to register a calling terminal number and a called terminal number may be provided and the caller and the called party may be notified on a later response from the selected sign language interpreter to set a videophone conversation.

While the sign language interpretation system 100 comprises a line I/F, a multiplexer/demultiplexer, a video CODEC, an audio CODEC, a video synthesizer, an audio synthesizer and a controller in the above embodiment, these components need not be implemented by individual hardware (H/W) but the function of each component may be implemented based on software running on a computer.

While the sign language interpreter terminal 30, same as the deaf-mute person terminal 10 and the non-deaf-mute person terminal 20, is located outside the sign language interpretation center and called from the sign language interpretation center over a public telephone line to provide a sign language interpretation service in the above embodiment, the invention is not limited thereto but part or all of the sign language interpreters may be provided in the sign language interpretation center to provide a sign language interpretation service from the sign language interpretation center.

In the above embodiment, a sign language interpreter can join a sign language interpretation service anywhere he/she may be, as long as he/she has a terminal which can be connected to a public telephone line. Thus the sign language interpreter can provide a sign language interpretation service by using the availability flag to make efficient use of free time. By doing so, it is possible to stably operate a sign language interpretation service accompanied by a problem of difficult reservation of a sign language interpreter. In particular, the number of volunteer sign language interpreters is increasing nowadays. A volunteer who is available only irregularly can provide a sign language interpretation service by taking advantage of a limited free time.

While a video signal of the home terminal is not input to the video synthesizers 128, 148, 168 in the above embodiment, a function may be provided to input the video signal of the home terminal for later synthesis and display to check the video on the terminal.

While the video synthesizers 128, 148, 168 and the audio synthesizers 130, 150 170 are used to synthesize videos and audios for each terminal in the above embodiment, the invention is not limited thereto, but videos and audios from all terminals may be synthesized at once and the resulting video or audio may be transmitted to each terminal.

While a function is provided whereby the telop memories 132, 152, 172 are provided and telops are added to the video synthesizers 128, 148, 168 in order to display a text telop on each terminal in the above embodiment, a function may be provided whereby a telop memory to store audio information and telops are added to the audio synthesizers 130, 150, 170 in order to output an audio message on each terminal. This makes it possible to set a videophone conversation via sign language interpretation even in case the non-deaf-mute person is a visually impaired person.

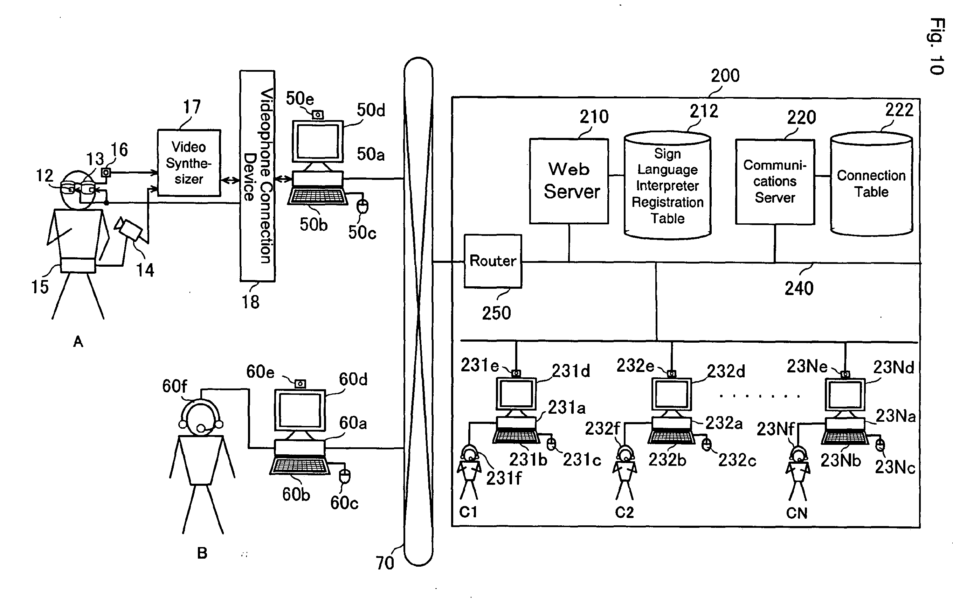

Fig. 10 is a system block diagram of a sign language interpretation system according to another embodiment of the invention. This embodiment shows a system configuration example assuming that each terminal used by a deaf-mute person, a non-deaf-mute person and a sign language interpreter is an IP (Internet Protocol) type videophone terminal to connect to the Internet equipped with a web browser.

In Fig. 10, a numeral 200 represents a sign language interpretation system installed in a sign language interpretation center to provide a sign language interpretation service. The sign language interpretation system 200 connects a deaf-mute person terminal 50 used by a deaf-mute person, a non-deaf-mute person terminal 60 used by a non-deaf-mute person, and the selected sign language interpreter terminals used by a sign language interpreter 231, 232, ... via the Internet 70 in order to provide a videophone conversation service via sign language interpretation between the deaf-mute person and the non-deaf-mute person.

While the deaf-mute person terminal 50, the non-deaf-mute person terminal 60 and the sign language interpreter terminals 231, 232,... each comprises a general-purpose processing device (a) such as a personal computer having a video input I/F function, an audio input/output I/F function and a network connection function, a keyboard (b) and a mouse (c) for input of information as well as a display (d) for displaying a web page screen presented by a web server 210 and a videophone screen supplied by a communications server 220, a television camera (e) for imaging the sign language of a sign language interpreter, and a headset (f) for performing audio input/output for the sign language interpreter, the processing device has IP videophone software and a web browser installed in this example, a dedicated videophone terminal may be used instead.

The videophone terminal connected to the Internet may be an IP videophone terminal based on ITU-T recommendation H.323, the invention is not limited thereto but may use a videophone terminal which employs a unique protocol.

The Internet may be of a wireless LAN type. The videophone terminal may be a cellular phone or a portable terminal equipped with a videophone function and also including a web access function.

The sign language interpretation system 200 comprises: a communications server 220 including a connection table 222 for setting the terminal addresses of a deaf-mute person terminal, a non-deaf-mute person terminal and a sign language interpreter terminal as well as a function to interconnect the terminals registered in the connection table 222 and synthesize a video and an audio received from each terminal and transmit the synthesized video and audio to each terminal; a web server 210 including a sign language interpreter registration table 212 for registering the selection information, terminal address and availability flag of a sign language interpreter as mentioned earlier, as well as a function to select a desired sign language interpreter based on an access from a calling terminal by using a web browser and set the terminal address of each of the calling terminal, called terminal and sign language interpreter terminal in the connection table 222 of the communications server220; a router 250 for connecting the web server 210 and the communications server 220 to the Internet; and a plurality of sign language interpreter terminals 231, 232,..., 23N connected to the communications server 220 via a network.

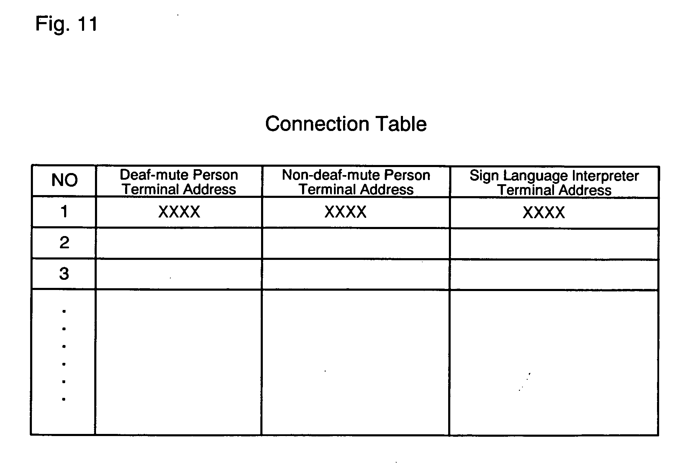

Fig. 11 shows an example of a connection table 222. As shown in Fig. 11, the terminal address of a deaf-mute person terminal, the terminal address of a non-deaf-mute person terminal and the terminal address of a sign language interpreter terminal are registered as a set in the connection table 222. This provides a single sign language interpretation service. The connection table 222 is designed to register a plurality of such terminal address set depending on the throughput of the communications server 220, thereby simultaneously providing a plurality of sign language interpretation services.

While the terminal address registered in the connection table 222 is an address on the Internet and is generally an IP address, the invention is not limited thereto but for example a name given by a directory server may be used.

The communications server 220 performs packet communications using a predetermined protocol with the deaf-mute person terminal, non-deaf-mute person terminal and sign language interpreter terminal set to the connection table 222 and provides, by way of software processing, the functions similar to those provided by a multiplexer/demultiplexer 122, 142, 162, a video CODEC 124, 144, 164, an audio CODEC 126, 146, 166, a video synthesizer 128, 148, 168, an audio synthesizer 130, 150, 170 in the above sign language interpretation system 100.

With this configuration, same as the sign language interpretation system 100, prescribed videos and audios are communicated between a deaf-mute person terminal, a non-deaf-mute person terminal and a sign language interpreter terminal, and a videophone conversation via sign language interpretation is established between the deaf-mute person and the non-deaf-mute person.

While the sign language interpretation system 100 uses the controller 180 and the telop memories 132, 152, 172 to extract a term registered in the term registration table 184 during a videophone conversation based on an instruction from a terminal and displays the term as a telop on the terminal, the same function may be provided by way of software processing by the communications server 220 in this embodiment also. A term specified by each terminal may be displayed as a popup message on the other terminal by way of the web server 210. Or, a telop memory may be provided in the communications server 220 so that a term specified by each terminal will be written into the telop memory via the web server 210 and displayed as a text telop on each terminal.

While the sign language interpretation system 100 uses the controller 180 to interconnect a deaf-mute person terminal, a non-deaf-mute person terminal and a sign language interpreter terminal, the connection procedure is made by the web server 210 in this embodiment because each terminal has a web access function.

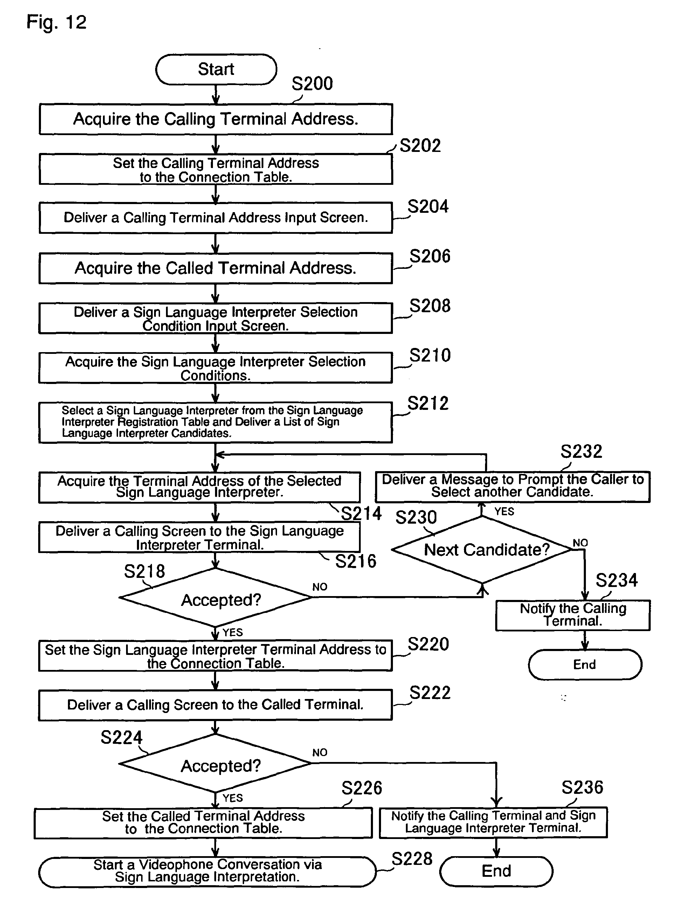

Fig. 12 is a processing flowchart of a connection procedure by the web server 210. The sign language interpretation system 200 also allows a deaf-mute person terminal or non-deaf-mute person terminal to propose a sign language interpretation service. A deaf-mute person or a non-deaf-mute person wishing to propose a sign language interpretation service accesses the web server 210 in the sign language interpretation center by using a web browser to log in from each own terminal, which starts the acceptance of the sign language interpretation service.

As shown in Fig. 12, the web server 210 first acquires the terminal address of a caller (S200) and sets the terminal address to the connection table 222 (S202). Next, the web server delivers a screen to prompt input of the called terminal address similar to that shown in Fig. 7 to the calling terminal (S204). The called terminal address input by the caller is acquired (S206). The web server delivers a screen to prompt input of the selection conditions for a sign language interpreter similar to that shown in Fig. 8 to the calling terminal (S208). The sign language interpreter selection conditions input by the caller are acquired (S210).

Next, a sign language interpreter with availability flag set is selected from among the sign language interpreters satisfying the selection conditions acquired from the sign language interpreter registration table 212. The web server 210 delivers a list of sign language interpreter candidates similar to that shown in Fig. 9 to the calling terminal to prompt input of the selection number of a desired sign language interpreter (S212). The selection number of the sign language interpreter input by the caller is acquired and the terminal address of the selected sign language interpreter is acquired from the sign language interpreter registration table 212 (S214). Based on the acquired terminal address of the sign language interpreter, the web server 210 delivers a calling screen to the sign language interpreter terminal (S216). In case the call is accepted by the sign language interpreter (S218), the terminal address of the sign language interpreter is set to the Connection table 222 (S220). Next, the web server 210 delvers a calling screen to the called terminal based on the acquired called terminal address (S222). In case the call is accepted by the called terminal (S224), the called terminal address is set to the connection table 222 (S226). Then, a videophone conversation via sign language interpretation starts (S228).

In case the sign language interpreter terminal does not accept the call in S218, whether a next candidate is available is determined (S230). In case a next candidate is available, the web server delivers a message to prompt the caller to select another candidate (S232) to the calling terminal, then execution returns to S214. In case another candidate is not found, the calling terminal is notified as such (S234) and the call is released.

In case the called terminal does not accept the call in S224, the calling terminal and the selected sign language interpreter terminal are notified as such (S236) and the call is released.

While in case the selected sign language interpreter terminal does not accept the call, the caller is notified as such and the call is released in the above embodiment, a sign language interpretation reservation table to register a calling terminal address and a called terminal address may be provided and the caller and the called party may be notified on a later response from the selected sign language interpreter to set a videophone conversation.

While the sign language interpreter terminal is located in the sign language interpretation system 200 of the sign language interpretation center in the above embodiment, the invention is not limited thereto but some or all of the sign language interpreter terminals may be provided outside the sign language interpretation center and connected via the Internet.

In the above embodiment, the configuration of the sign language interpretation system has been described for a case where a videophone terminal used by a deaf-mute person, a non-deaf-mute person or a sign language interpreter is a telephone-type videophone terminal connected to a public telephone line and a case where the videophone terminal is an IP-type videophone terminal connected to the Internet, the telephone-type videophone terminal and the IP-type videophone terminal can communicate with each other by arranging a gateway to perform protocol conversion therebetween. A sign language interpretation system conforming to one protocol may be provided via the gateway to support a videophone terminal conforming to the other protocol.

In this way, the sign language interpretation system allows the user to enjoy or provide a sign language interpretation service anywhere he/she may be, as long as he/she has a terminal which can be connected to a public telephone line or the Internet. A sign language interpreter does not always have to visit a sign language interpretation center but can present a sign language interpretation from his/her home or a facility or site where a videophone terminal is located, or provide a sign language interpretation service by using a cellular phone or a portable terminal equipped with a videophone function.

A person with the ability of sign language interpretation may wish to register in the sign language interpreter registration table in the sign language interpretation center in order to provide a sign language interpretation service anytime when it is convenient to him/her. From the viewpoint of the operation of the sign language interpretation center, it is not necessary to summon sign language interpreters to the center. This allows efficient operation of the sign language interpretation center both in terms of time and costs. In particular, the number of volunteer sign language interpreters is increasing nowadays. The sign language interpretation service can be provided from a sign language interpreter's home, which facilitates reservation of a sign language interpreter.

### Industrial Applicability

As mentioned above, according to the invention, a deaf-mute person can add explanation with sign language while transmitting a target video other than sign language. It is thus possible to precisely explain the target thereby speeding up a conversation.

## Claims

1. A video input device for conversation with sign language comprising: sign language imaging means for picking up sign language; video acquisition means for acquiring a video other than sign language; video synthesis means for synthesizing a sign language video picked up by said sign language imaging means and a video other than sign language acquired by said video acquisition means; and video transmission means for transmitting the video synthesized by said video synthesis means; **characterized in that** a deaf-mute person can add explanation while transmitting a video other than sign language.

2. The video input device for conversation with sign language according to claim 1, **characterized in that** said sign language imaging means comprises waist fixing means to be fixed at the waist of said deaf-mute person.

3. The video input device for conversation with sign language according to claim 1 or 2, **characterized in that** said video transmission means comprises videophone connection means to be connected to a videophone terminal.

4. The video input device for conversation with sign language according to claim 3, **characterized in that** said videophone connection means comprises radio communications means for performing radio communications with said videophone terminal.

5. A video input/output device for conversation with sign language comprising the video input device for conversation with sign language according to claim 3 or 4,
said videophone connection means including sign language video receiving means for receiving a sign language video being received by said videophone terminal, **characterized in that**
said video input/output device for conversation with sign language includes display means for displaying a sign language video received by said sign language video receiving means and fixing means for fixing said display means in front of the eyes of said deaf-mute person.

6. The video input/output device for conversation with sign language according to claim 5, **characterized in that** said display means comprises a convex lens which can substantially focus on a sign language video displayed on said display means when said deaf-mute person views the outer world.

7. The video input/output device for conversation with sign language according to claim 5 or 6, **characterized in that** said fixing means has a frame structure which can be fixed to the ears and nose of a deaf-mute person.

8. The video input/output device for conversation with sign language according to any one of claims 5 through 7, **characterized in that** said video acquisition means includes target imaging means for picking up a target other than sign language and
said target imaging means is fixed to said fixing means and picks up the area in the viewing direction of the deaf-mute person.

9. A sign language interpretation system interconnecting a videophone terminal for deaf-mute persons used by a deaf-mute person capable of using sign language to which is connected the video input/output device for conversation with sign language according to any one of claims 5 through 8, a videophone terminal for non-deaf-mute persons used by a non-deaf-mute person incapable of using sign language, and a videophone terminal for sign language interpreters used by a sign language interpreter in order to provide sign language interpretation in a conversation between a deaf-mute person and a non-deaf-mute person over a videophone, **characterized in that**
said system comprises connection means equipped with a sign language interpreter registration table where the terminal number of said videophone terminal for sign language interpreters used by a sign language interpreter is registered, said connection means including a function to accept a call from said videophone terminal for deaf-mute persons or said videophone terminal for non-deaf-mute persons, a function to prompt a calling videophone terminal for which said call is accepted to enter the terminal number of the called terminal, a function to extract the terminal number of a sign language interpreter from said sign language interpreter registration table, a function to call the videophone terminal for sign language interpreters by using said extracted terminal number of the sign language interpreter, and a function to call the called videophone terminal by using said acquired called terminal number and
communications means including a function to synthesize at least a video from said videophone terminal for non-deaf-mute persons and a video from said videophone terminal for sign language interpreters and transmit the resulting video to said videophone terminal for deaf-mute persons, a function to transmit at least a video from said videophone terminal for deaf-mute persons and an audio from said videophone terminal for sign language interpreters to said videophone terminal for non-deaf-mute persons, and a function to transmit at least a video from said videophone terminal for deaf-mute persons and an audio from said videophone terminal for non-deaf-mute persons to said videophone terminal for sign language interpreters.

10. The sign language interpretation system according to claim 9, **characterized in that**
selection information for selecting a sign language interpreter is registered in said sign language interpreter registration table and that said connection means includes a function to acquire the conditions for selecting a sign language interpreter from said calling videophone terminal and a function to extract the terminal number of a sign language interpreter who satisfies said acquired selection conditions for the sign language interpreter from said sign language interpreter registration table.
